(19) Europäisches Patentamt
European Patent Office
Office européen des brevets

(11) **EP 2 607 321 A1**

(12) # EUROPEAN PATENT APPLICATION

(43) Date of publication:
**26.06.2013 Bulletin 2013/26**

(51) Int Cl.:
***C02F 1/469*** (2006.01)    ***H01M 8/22*** (2006.01)

(21) Application number: **12198574.1**

(22) Date of filing: **20.12.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **23.12.2011  NL 2008031**

(71) Applicant: **Voltea B.V.
2171 AE Sassenheim (NL)**

(72) Inventors:
• **van der WAL, Albert
2341 LP OEGSTGEEST (NL)**
• **DLUGOLECKI, Piotr Edward
80-296 GDANSK (PL)**

(74) Representative: **Fluit, Jeroen
Exter Polak & Charlouis B.V. (EP&C)
P.O. Box 3241
2280 GE Rijswijk (NL)**

(54)    **A reverse capacitive de-ionisation apparatus and method for generating electricity**

(57)    The invention relates to an apparatus for generating electricity from water, the apparatus being provided with a first and second master electrode. The electrodes defining a flow path allowing water to flow along the electrodes and the apparatus is constructed to alternately allow water with a relatively high ion concentration and water with a relatively low ion concentration to flow along the electrodes. The apparatus may be provided with a floating electrode located between the first and second master electrodes in the flow path. One of the master and floating electrodes may be provided with a selective ion barrier layer, the selective ion barrier layer being selectively impermeable for either anions or cations.

Fig.1

## Description

### Field

The invention relates to an apparatus and method for generating electricity from water, the apparatus being provided with a first and second master electrode, the electrodes defining a flow path allowing water to flow along the electrodes and the apparatus is constructed to alternately allow water with a relatively high ion concentration and water with a relatively low ion concentration to flow along the electrodes thereby charging or discharging the electrodes generating electricity.

### Background

Renewable and sustainable energy sources are playing an important role and are becoming increasingly important due to environmental issues, such as global warming. Membrane technology may provide an opportunity to gain renewable and sustainable energy from salinity gradients via e.g. pressure retarded osmosis, reverse electrodialysis or reverse capacitive deionization.
WO2010/062175 discloses an energy generating system comprising:

-    a first capacitive element with a current collector;
-    a cation exchange material placed between the first capacitive element and the fluid;
-    a second capacitive element with a current collector; and,
-    an anion exchange material placed between the second capacitive element and the fluid, wherein the cation and anion exchange material are in contact with the fluid, the fluid alternating comprising a concentrate and a diluate for charging respectively discharging the capacitive elements, thereby generating energy.

A disadvantage of the above apparatus may be that the Voltages between the capacitive elements are in a range from -40 to 50 millivolts which with the required transport of electrical currents gives high energy losses.

### Summary of the invention

It is an object to provide an apparatus for generating electricity from water with an improved efficiency.
Accordingly there is provided an apparatus for generating electricity from water, the apparatus being provided with a first and second master electrode, the electrodes defining a flow path allowing water to flow along the electrodes and the apparatus is constructed to alternately allow water with a relatively high ion concentration and water with a relatively low ion concentration to flow along the electrodes thereby charging or discharging the electrodes generating electricity, wherein the apparatus is provided with a floating electrode located between the first and second master electrodes in the flow path and at least one of the master and floating electrodes is provided with a selective ion barrier layer, the selective ion barrier layer being selectively impermeable for either anions or cations so that in use cations or anions of the water with the relatively high ion concentration will flow through the selective ion barrier layer thereby charging the electrodes.
By applying floating electrodes the Voltage at the master electrodes may be increased. The floating electrodes may not be electrically connected to a power converter. The charge on the floating electrodes may be used to add to the electrical potential between the master electrodes. A higher electrical potential i.e. Voltage may give less loses during electrical transport hence improving the efficiency of the apparatus.
The selective ion barrier layer being selectively impermeable for either anions or cations makes the electrode selective for cations or anions of the water with the relatively high ion concentration thereby charging the electrodes. The floating electrodes may be provided with a selective ion barrier layer being selectively impermeable for anions on one side and a selective ion barrier layer being selectively impermeable for cations on another side.
The apparatus may be constructed to generate an electrical potential difference between the two master electrodes by charging or discharging of the master and floating electrodes to generate electricity. The charge on the floating electrodes may add to the electrical potential difference of the master electrodes increasing the Voltage between the master electrodes minimizing losses by the resistance in the wiring.
The floating electrode comprise an non-selective ion barrier layer which is electrically conductive but impermeable for anions and cations. The floating electrodes may be provided with a selective ion barrier layer being selectively impermeable for anions on one side and a selective ion barrier layer being selectively impermeable for cations on another side. The non selective ion barrier layer in the middle between the selective ion barrier layer assures that the anions and the cations are kept separated in the floating electrode. Between the ion selective barrier layer and the non selective ion barrier layer a ion storage material may be provided to store the ions.

The apparatus comprises a controller provided with a first switch in order to direct the electrical potential from the master electrodes either to a first pole or a second pole of a power terminal. In this way the charge on the electrodes is transferred to a first and second pole which has a constant polarity.

The apparatus may be provided with a water flow adjuster to create a water flow along the electrodes with the water containing sequentially relatively high and relatively low concentrations of ions. The water flow adjuster may be a valve or a pump and the apparatus comprises an inlet and a water outlet and the water flows from the water inlet to the water outlet at least partially along the electrodes.

The water flow adjuster may be provided in the water inlet for closing and opening a water stream to allow the flow of water with a relatively high ion concentration along the electrodes and/or for closing and opening a water stream to allow the flow of water with a relatively low ion concentration.

The at least one floating electrode may be provided with the selective ion barrier layer being selectively impermeable for either anions or cations.

The selective ion barrier layer may be provided along the surface of the master and/or floating electrode extending parallel to the surface of the floating and/or master electrodes.

A thickness of the selective ion barrier layer is in a range of 5-1000 micrometers, or preferably in a range of 10-500 micrometers or more preferably in a range of 20-250 micrometers.

An electrical insulating material may be provided to the floating electrode extending outwardly from an edge in a longitudinal direction of said floating electrode. The insulating material may extend from said edge at least 0.5 mm or in a range of 0.5 - 50 mm, or more preferably in a range of 3 - 20 mm. The electrical insulating material may decrease the chance on short circuit currents between the master and or floating electrodes.

The controller may control the water flow adjuster so that the controller alternatingly allows the flow of water with a relatively high ion concentration with the flow of water with a relatively low ion concentration along the electrodes.

The master electrodes may be provided with a selective ion barrier layer being selectively impermeable for either anions or cations.

According to a further embodiment there is provided a method for generating electricity, the method comprising:

providing at least two master electrodes and at least one floating electrode located between the at least two master electrodes, at least one of the master and floating electrodes being provided with a selective ion barrier layer being selectively impermeable for either anions or cations;

alternating a flow of water with a relatively high ion concentration with a flow of water with a relatively low ion concentration along the electrodes; thereby, allowing anions or cations of the water with the relatively high ion concentration to flow through the selective ion barrier layer thereby charging the electrodes and creating an electrical potential difference between the two master electrodes from which electricity is generated.

By applying floating electrodes the Voltage at the master electrodes may be increased. The floating electrodes may not be electrically connected to a power converter. The charge on the floating electrodes may be used to add to the electrical potential between the master electrodes. A higher electrical potential i.e. Voltage may give less loses during electrical transport hence improving the efficiency of the method.

Brief description of the figures

Embodiments of the invention will now be described, by way of example only, with reference to the accompanying schematic drawings in which:

Figure 1 shows schematic representation of reverse capacitive deionization system according to an embodiment; and,
Figure 2 shows the Voltage during discharging and charging.

Detailed description of the invention

The apparatus may comprise two or more master electrodes 1, 3 where a potential difference may be generated and which may be converted into electricity. Master electrodes 1, 3 may comprise a current collector 2 and ion storage material 4 (e.g. activated carbon, carbon nanotubs, graphene or other material with similar properties). The master electrodes 1, 3 may be connected to a power converter P which may convert the potential for an external load. Master electrodes may be used as an anode or as a cathode. Selective ion barrier layers e.g. ion exchange membranes may be provided to the master electrodes. An anion exchange membrane 7 may be situated on the anode master electrode 1 and a cation exchange membrane 9 may be placed on the cathode master electrode 3. By application of ion exchange membranes as a selective ion barrier layer ions may be selectively adsorbed at master electrodes with high coulombic efficiency. The selective ion barrier layer may have a thickness in a range of 5 - 1000 micrometers, or preferably in a range of 10 -500 micrometers or more preferably in a range of 20 -250 micrometers

Between the master electrodes floating electrodes 5 i.e. electrodes that are not electrically connected to a power converter may be situated. Floating electrodes 5 may comprise an ion barrier layer being impermeable for either anions and/or cations for example a non-ionically layer, which is electrically conductive (e.g. graphite foil) 6. On each side of the non-ionically, electrically conductive layer 6 an ion storage material 4, e.g. activated carbon, carbon nanotubs, graphene or other material with similar properties may be provided. The floating electrodes 5 may not be electrically connected to any device which can extract the charge. Ion exchange membranes may also be provided on floating storage electrodes 5. A selective ion barrier layer e.g. anion exchange membrane 7 may be provided on the floating electrode 5 in a direction of cathode master electrode 3 and a selective ion barrier layer e.g. cation exchange membrane 9 may be provided towards anode 1. The anion exchange membrane 7 and/or cation exchange membrane 9 may be also chemically or mechanically be integrated with the master electrodes 3 and/or floating electrodes 5. As depicted only one floating electrode is applied, in reality the number of floating electrodes may be between 1 to 5000 preferable between 1 to 1000, more preferably between 2 to 200 and most preferably between 5 to 60. An electrical insulating material may be provided to the floating electrode extending outwardly from an edge in a longitudinal direction of said floating electrode to electrically insulate the two sides of the floating electrode 5 from each other. The insulating material may extend from said edge at least 0.5 mm or in a range of 0.5 - 50 mm, or more preferably in a range of 3 - 20 mm.

Between the master electrodes and floating electrodes a flow channel may be created which allows water to flow between two adjacent ion exchange membranes. The water 11 may be flowing through a spacer 8 along the electrodes to a hole 10. The apparatus may comprise a water flow adjuster e.g. a valve or a pump to control the water flow and to switch the water from water with a high ionic concentration to water with a low ionic concentration. Typically, the outer dimensions of the master electrodes and floating storage electrode may be about 16 x 16 cm, 20 x 20 cm or 25 x 25 cm and the dimensions of the hole 10 may be about 3 x 3 cm.

Master electrodes and/or floating electrodes may have a different shape. An advantage of a rectangular or a hexagonal shapes for the electrode may be that the electrodes may be efficiently produced with respect to the use of materials. An advantage of a round shaped electrode with a round hole in the centre may be that a distance between the outer edge and the inner edge (i.e. the distance the water will flow along the electrode) is constant for all flow directions.

Reverse capacitive deionization may be a batch wise process comprising a charge accumulation step and a charge release step. During charge accumulation step ions may diffuse/migrate from a solution with a relatively high ionic concentration through ion exchange membranes into the ion storage material of a floating electrode and/or the ion storage material of a master electrode. Due to this ion movement a potential difference between the master electrodes may be created and when an external load is connected to the master electrodes an electrical current may be flowing through the load from one master electrode to another master electrode. When a current flows through the reverse capacitive de-ionization device, each electrode repels ions of the same charge and attracts ions of opposite charge, thus forming an oppositely charged bi-layer, whereby the electrical charge at the electrode surface is compensated by the ionic charge, whereby the energy is stored in the resulting electrical double layer.

The next step may be a charge release step and during this process ions diffuse/migrate from the ion storage material of the floating electrode and the master electrodes into a dilute solution through the ion exchange membranes. Due to this ion movement a potential difference between master electrodes may be created and when an external load may be connected to the master electrodes then an electrical current may be flowing through the load from one master electrode to another master electrode and the chargedionic layer may be relaxed.

In this process ion exchange membranes are used to improve efficiency of the process and allow the selective transport of ions. Anion exchange membranes contain fixed positive charges which allow anions to be transported through the membrane. Cation exchange membranes contain fixed negative charges which allow cations to be transported through the membrane.

The difference in chemical potential between both solutions may be the driving force for the reverse capacitive de-ionisation process. A voltage difference may be generated over the two master electrodes and/or between a master electrode and a floating electrode and/or between different floating electrodes. Because these voltages are cumulative, therefore the voltage at the master electrodes may be increased. A power converter may be connected to the master electrodes to assure that a positive voltage may be applied to the positive pole of the power terminal and a negative voltage to the negative pole. The power converter may be provided with a first switch for alternatingly connecting the first master electrode to a first pole and a second master electrode to a second pole of the power converter. The power converter may be provided with a second switch for alternatingly connecting the first master electrode to a first or second pole of the power terminal. By adding up the voltage differences over each floating and master electrode the voltage output may be sufficiently high to avoid significant losses in the power converter.

The theoretical value of the chemical potential for an aqueous monovalent electrolyte (e.g. NaCl) can be calculated using the Nerst equation (Equation 1):

$$\Delta\phi = \frac{RT}{zF}\ln\left(\frac{a_c}{a_d}\right) \qquad (1)$$

Where $\Delta\Phi$ is the chemical potential (V), R is the gas constant (8.314 J/(mol·K)), T is the absolute temperature (K), z is the electrochemical valence, F is the Faraday constant (96485 C/mol), $a_c$ is the activity of the concentrated solution and $a_d$ is the activity of the diluted solution. For sweet water (e.g. 1 g/l NaCl) and sea water (e.g. 30g/l NaCl) the theoretical voltage difference per layer (ion storage layer + ion exchange membrane) is approximately 80 mV. The overall potential of the apparatus is the sum of the potential differences over each layer.

To predict the open circuit voltage of a reverse capacitive deionisation, R-CDI) apparatus Equation 2 may be used:

$$V^0 = N\cdot\alpha RT/zF\cdot\ln(a_c/a_d) \qquad (2)$$

Where $V^0$ is the open circuit potential of the membrane stack (V), $\alpha$ is the average membrane pair perm selectivity, N is the number of layers (one ion storage layer and one ion exchange membrane, anion exchange membrane or cation exchange membrane), R is the gas constant (8.314 J/mol·K), T is the absolute temperature (K), z is the electrochemical valence, F is the Faraday constant (96.485 C/mol), $a_c$ is the concentrated salt solution activity and $a_d$ is the diluted salt solution activity.

The power output of the R-CDI apparatus may be calculated from Kirchhoff's law and may be defined as:

$$W= I^2\cdot R_{load} = [(V^0)^2\cdot R_{load}]/[(R_{R\text{-}CDI} + R_{load})^2] \qquad (3)$$

Where I is the current (A), $R_{load}$ is the load resistance ($\Omega$), $R_{R\text{-}CDI}$ is the resistance of R-CDI apparatus ($\Omega$) and $V^0$ is the open circuit potential of the R-CDI apparatus (V).

**Example 1**

Reverse capacitive de-ionisation apparatus with 32 layers (16 anion exchange material, 16 cathode exchange material, 15 floating electrodes, 2 master electrodes, 16 spacers was used in this experiments. Woven spacer material with a thickness of 115 $\mu$m and area of 247cm$^2$ was used as a spacer 8 and to form a flow channel. Master electrodes 1, 3 as well as floating electrodes 5 were made by Voltea comprising graphite foil as ion barrier 6 and/or current collector and activated carbon. As a concentrated solution 46.9 mS/cm NaCl solution was used and as a dilute solution 1 mS/cm solution was used.

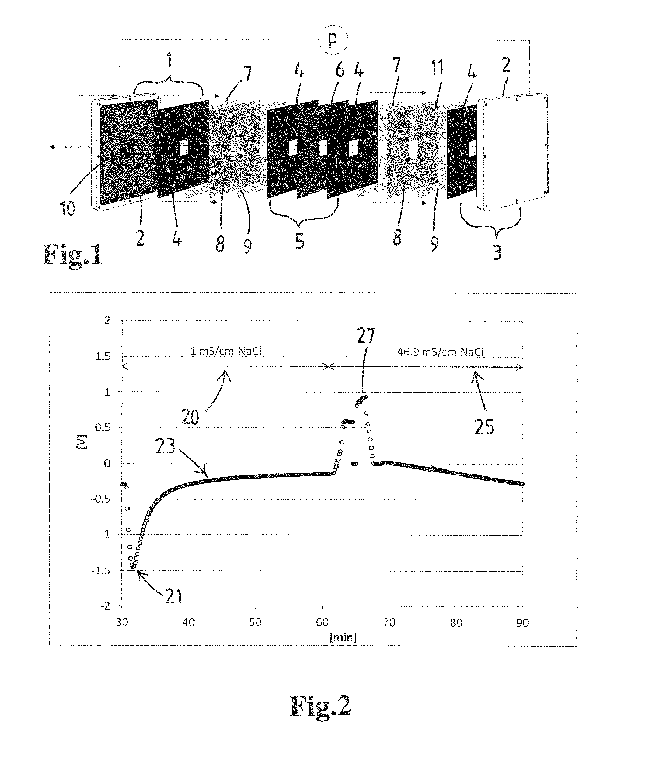

A procedure was followed whereby the a 30 minutes charging cycle was followed by a 30 minutes discharge cycle at 0.1 Amp (constant current), which was repeated several times. The long cycle time was chosen in order to reach equilibrium. Figure 2 shows a typical discharging-charging cycle, whereby at the first part 20, when dilute solution (e.g. water with NaCl having a conductivity of 1 mS/cm) was pumped through the reverse capacitive deionization apparatus, an open circuit voltage increased to -1.5V 21. This observation indicates that the voltages of the individual layers are cumulative, where the observed electrical current indicates ion movement into the ion storage material of the master electrodes and floating electrodes until equilibrium 23 is reached after ca. 10 minutes an equilibrium 23. The second part 25 represents the charging of electrodes when a concentrate solution (using water with NaCl having a conductivity of 46.9 mS/cm) was pumped through the R-CDI, which leads to a cumulative voltage over the layers and an electrical current due to the fact that ions are absorbed into electronic double layer and electricity may be generated. This results in a peak Voltage 27. After the electrodes are charged then the next step is a discharge step, where ions are released from the electrical double layer back into the flow channel at a constant current of 0.1 A. This discharge results in generated energy, whereby a peak power of 0.51 W/m$^2$ of spacer area is reached and an average power of 0.25W/m$^2$. This demonstrates that electricity may be produced from charging and discharging the electrodes.

**Table 1:** Calculated power output.

| | | | Power [W] | Power [W/m2 spacer] | Power [W/m2 membrane] |
|---|---|---|---|---|---|
| Discharge current | | 0.1A | | | |
| Peak | Voltage | 2V | 0.2 | 0.51 | 0.25 |

(continued)

| | | | Power [W] | Power [W/m2 spacer] | Power [W/m2 membrane] |
|---|---|---|---|---|---|
| Average | Voltage | 1V | 0.1 | 0.25 | 0.13 |

While specific embodiments of the invention have been described above, it will be appreciated that the invention may be practiced otherwise than as described. For example, the invention may take the form of a computer program containing one or more sequences of machine-readable instructions describing a method as disclosed above, or a data storage medium (e.g. semiconductor memory, magnetic or optical disk) having such a computer program stored therein.

Embodiment may be further described by the following numbered clauses:

1. An apparatus for generating electricity from water, the apparatus being provided with a first and second master electrode, the electrodes defining a flow path allowing water to flow along the electrodes and the apparatus is constructed to alternately allow water with a relatively high ion concentration and water with a relatively low ion concentration to flow along the electrodes, wherein the apparatus is provided with a floating electrode located between the first and second master electrodes in the flow path.

2. Apparatus according to clause 1, wherein an electrical potential difference is generated between the two master electrodes.

3. Apparatus according to clause 1, wherein an electrical current is generated between the two master electrodes.

4. Apparatus according to any of the preceding clauses, wherein electricity is generated from the electrical current between the two master electrodes.

5. Apparatus according to any of the preceding clauses, wherein the apparatus comprises a controller provided with a first switch in order to direct the electrical potential from the master electrodes either to a first pole or a second pole of a power terminal.

6. Apparatus according to any of the preceding clauses, wherein the apparatus is being provided with a water flow adjuster to allow water flowing along the electrodes, wherein the water contains sequentially relatively high and low concentrations of ions.

7. Apparatus according to clause 6, wherein the water flow adjuster is a valve or a pump.

8. Apparatus according to clause 7, wherein the apparatus comprises an inlet and a water outlet and the water flows from the water inlet to the water outlet at least partially along the electrodes.

9. Apparatus according to any of the preceding clauses, wherein the water flow adjuster is provided in the water inlet for closing and opening a water stream to allow the flow of water with a relatively high ion concentration along the electrodes and/or for closing and opening a water stream to allow the flow of water with a relatively low ion concentration.

10. Apparatus according to any of the preceding clauses, wherein at least one of the master and floating electrodes is being provided with a selective ion barrier layer, the selective ion barrier layer being selectively impermeable for either anions or cations.

11. Apparatus according to any one of the preceding clauses, wherein the at least one floating electrode is provided with an ion barrier layer being impermeable for either anions or cations.

12. Apparatus according to clause 11, wherein the ion barrier layer is provided in the floating electrode extending parallel to the master electrodes.

13. Apparatus according to any of the preceding clauses, wherein the at least one floating electrode is provided with a selective ion barrier layer being selectively impermeable for either anions or cations.

14. Apparatus according to clause 13, wherein the selective ion barrier layer is provided along the surface of the floating electrode extending parallel to the master electrodes.

15. Apparatus according to any of clauses 10-14, wherein a thickness of the selective ion barrier layer is in a range of 5-1000 micrometers, or preferably in a range of 10-500 micrometers or more preferably in a range of 20-250 micrometers.

16. Apparatus according to any of clauses 1-15, wherein an electrical insulating material is provided to the floating electrode extending outwardly from an edge in a longitudinal direction of said floating electrode.

17. Apparatus according to clause 16, wherein said insulating material extends from said edge at least 0.5 mm or in a range of 0.5 - 50 mm, or more preferably in a range of 3 - 20 mm.

18. Apparatus according to any of clauses 5 to 17, wherein the controller controls the water flow adjuster so that the controller alternatingly allows the flow of water with a relatively high ion concentration with the flow of water with a relatively low ion concentration along the electrodes.

19. Apparatus according to any of clauses 1-18, wherein the master electrodes are provided with a selective ion barrier layer being selectively impermeable for either anions or cations.

20. The apparatus according to any of the preceding clauses, wherein at least one floating or master electrode has a substantially sheet like shape, in which a hole is provided.

21. A method for generating electricity, the method comprising:

providing at least two master electrodes and at least one floating electrode located between the at least two master electrodes;

allowing water to flow along the electrodes;

alternating a flow of water with a relatively high ion concentration with a flow of water with a relatively low ion concentration along the electrodes; thereby,

creating an electrical potential difference between the two master electrodes from which electricity is generated.

22. The method according to clause 21, the method comprising providing master electrodes and/or floating electrodes with a membrane.

The descriptions above are intended to be illustrative, not limiting. Thus, it will be apparent to one skilled in the art that modifications may be made to the invention as described without departing from the scope of the claims set out below.

## Claims

1.  An apparatus for generating electricity from water, the apparatus being provided with a first and second master electrode, the electrodes defining a flow path allowing water to flow along the electrodes and the apparatus is constructed to alternately allow water with a relatively high ion concentration and water with a relatively low ion concentration to flow along the electrodes thereby charging or discharging the electrodes generating electricity, wherein the apparatus is provided with a floating electrode located between the first and second master electrodes in the flow path and at least one of the master and floating electrodes is provided with a selective ion barrier layer, the selective ion barrier layer being selectively impermeable for either anions or cations so that in use cations or anions of the water with the relatively high ion concentration will flow through the selective ion barrier layer thereby charging the electrodes.

2.  Apparatus according to claim 1, wherein the apparatus is constructed to generate an electrical potential difference between the two master electrodes by charging or discharging of the master and floating electrodes to generate electricity.

3.  Apparatus according to claim 1 or 2, wherein the floating electrode comprise an non-selective ion barrier layer which is electrically conductive but impermeable for anions and cations.

4.  Apparatus according to any of the preceding claims, wherein the apparatus comprises a controller provided with a first switch in order to direct the electrical potential from the master electrodes either to a first pole or a second pole of a power terminal.

5.  Apparatus according to any of the preceding claims, wherein the apparatus is being provided with a water flow adjuster to create a water flow along the electrodes with the water containing sequentially relatively high and relatively low concentrations of ions.

6.  Apparatus according to claim 5, wherein the water flow adjuster is a valve or a pump and the apparatus comprises an inlet and a water outlet and the water flows from the water inlet to the water outlet at least partially along the electrodes.

7.  Apparatus according to any of claims 5 - 6, wherein the water flow adjuster is provided in the water inlet for closing and opening a water stream to allow the flow of water with a relatively high ion concentration along the electrodes and/or for closing and opening a water stream to allow the flow of water with a relatively low ion concentration.

8.  Apparatus according to any of the preceding claims, wherein the at least one floating electrode is provided with the selective ion barrier layer being selectively impermeable for either anions or cations

9.  Apparatus according to any of claims 1 - 8, wherein the selective ion barrier layer is provided along the surface of the master and/or floating electrode extending parallel to the surface of the floating and/or master electrodes.

10. Apparatus according to any of claims 8- 9, wherein a thickness of the selective ion barrier layer is in a range of 5-1000 micrometers, or preferably in a range of 10-500 micrometers or more preferably in a range of 20-250 micrometers.

11. Apparatus according to any of claims 1-10, wherein an electrical insulating material is provided to the floating electrode extending outwardly from an edge in a longitudinal direction of said floating electrode.

12. Apparatus according to claim 11, wherein said insulating material extends from said edge at least 0.5 mm or in a range of 0.5 - 50 mm, or more preferably in a range of 3 - 20 mm.

13. Apparatus according to any of claims 4 - 12, wherein the controller controls the water flow adjuster so that the controller alternatingly allows the flow of water with a relatively high ion concentration with the flow of water with a relatively low ion concentration along the electrodes.

14. Apparatus according to any of claims 1-13, wherein the master electrodes are provided with a selective ion barrier layer being selectively impermeable for either anions or cations.

15. A method for generating electricity, the method comprising:

providing at least two master electrodes and at least one floating electrode located between the at least two master electrodes, at least one of the master and floating electrodes being provided with a selective ion barrier layer being selectively impermeable for either anions or cations;
alternating a flow of water with a relatively high ion concentration with a flow of water with a relatively low ion concentration along the electrodes; thereby, allowing anions or cations of the water with the relatively high ion concentration to flow through the selective ion barrier layer thereby charging the electrodes and creating an electrical potential difference between the two master electrodes from which electricity is generated.

**Fig.1**

**Fig.2**

Europäisches
Patentamt

European
Patent Office

Office européen
des brevets

# EUROPEAN SEARCH REPORT

**Application Number**

EP 12 19 8574

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/062175 A1 (STICHTING WETSUS CT OF EXCELLE [NL]; HAMELERS HUBERTUS VICTOR MARIE [N) 3 June 2010 (2010-06-03) * the whole document * | 1,2,4-7, 13,15 | INV. C02F1/469 H01M8/22 |
| X | WO 00/75403 A1 (SOUTHEASTERN TRADING LLP [US]) 14 December 2000 (2000-12-14) * page 7 - page 13 * | 1,2,4-9, 14,15 | |
| Y | * page 35 - page 36; figures 1-4, 10 * | 10-12 | |
| X | WO 98/09002 A1 (SACHEM INC [US]) 5 March 1998 (1998-03-05) | 1,2,5-7, 15 | |
| Y | * page 12 - page 26; figures 1-6 * | 10-12 | |
| X | US 2010/147704 A1 (XIONG RIHUA [CN] ET AL) 17 June 2010 (2010-06-17) | 1,2,4-7, 13,15 | |
| Y | * paragraph [0026] - paragraph [0039]; figures 1-7 * | 10-12 | |
| X | EP 1 164 110 A1 (ABB RESEARCH LTD [CH]) 19 December 2001 (2001-12-19) * paragraph [0022] - paragraph [0030]; figures 3, 4 * | 1,2,4-7 | TECHNICAL FIELDS SEARCHED (IPC) C02F H01M |
| X | US 5 954 937 A (FARMER JOSEPH C [US]) 21 September 1999 (1999-09-21) * column 29, line 45 - column 30, line 60; figures 36, 37 * | 1,2,4-7 | |
| X | EP 1 348 670 A1 (LUXON ENERGY DEVICES CORP [TW]) 1 October 2003 (2003-10-01) * paragraph [0007] - paragraph [0018] * * abstract * | 1,2,4-7, 13,15 | |

The present search report has been drawn up for all claims

| Place of search | Date of completion of the search | Examiner |
|---|---|---|
| Munich | 3 May 2013 | Wiedemann, Eric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 12 19 8574

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2013

| Patent document cited in search report | | | Publication date | Patent family member(s) | | | Publication date |
|---|---|---|---|---|---|---|---|
| WO 2010062175 | A1 | | 03-06-2010 | EP | 2351137 | A1 | 03-08-2011 |
| | | | | ES | 2402218 | T3 | 29-04-2013 |
| | | | | WO | 2010062175 | A1 | 03-06-2010 |
| WO 0075403 | A1 | | 14-12-2000 | AU | 6746800 | A | 28-12-2000 |
| | | | | US | 6096179 | A | 01-08-2000 |
| | | | | WO | 0075403 | A1 | 14-12-2000 |
| WO 9809002 | A1 | | 05-03-1998 | AT | 350139 | T | 15-01-2007 |
| | | | | AU | 4237297 | A | 19-03-1998 |
| | | | | CA | 2264086 | A1 | 05-03-1998 |
| | | | | CN | 1234080 | A | 03-11-1999 |
| | | | | DE | 69737203 | T2 | 18-10-2007 |
| | | | | EP | 0944747 | A1 | 29-09-1999 |
| | | | | HK | 1023374 | A1 | 04-04-2007 |
| | | | | JP | 4320055 | B2 | 26-08-2009 |
| | | | | JP | 2000517379 | A | 26-12-2000 |
| | | | | KR | 20000035915 | A | 26-06-2000 |
| | | | | MY | 115681 | A | 30-08-2003 |
| | | | | TW | 411368 | B | 11-11-2000 |
| | | | | US | 5833832 | A | 10-11-1998 |
| | | | | WO | 9809002 | A1 | 05-03-1998 |
| US 2010147704 | A1 | | 17-06-2010 | CN | 102256904 | A | 23-11-2011 |
| | | | | EP | 2379455 | A1 | 26-10-2011 |
| | | | | JP | 2012512024 | A | 31-05-2012 |
| | | | | KR | 20110098823 | A | 01-09-2011 |
| | | | | SG | 172055 | A1 | 28-07-2011 |
| | | | | US | 2010147704 | A1 | 17-06-2010 |
| | | | | WO | 2010077448 | A1 | 08-07-2010 |
| EP 1164110 | A1 | | 19-12-2001 | AU | 5458601 | A | 24-12-2001 |
| | | | | EP | 1164110 | A1 | 19-12-2001 |
| | | | | WO | 0196245 | A1 | 20-12-2001 |
| US 5954937 | A | | 21-09-1999 | AT | 382583 | T | 15-01-2008 |
| | | | | AU | 3194495 | A | 21-12-1995 |
| | | | | CA | 2190829 | A1 | 07-12-1995 |
| | | | | EP | 0760805 | A1 | 12-03-1997 |
| | | | | IL | 113798 | A | 14-07-1999 |
| | | | | JP | 4162709 | B2 | 08-10-2008 |
| | | | | JP | H11505463 | A | 21-05-1999 |
| | | | | JP | 2008178875 | A | 07-08-2008 |
| | | | | US | 5425858 | A | 20-06-1995 |
| | | | | US | 5954937 | A | 21-09-1999 |
| | | | | WO | 9532803 | A2 | 07-12-1995 |

EPO FORM P0459

For more details about this annex : see Official Journal of the European Patent Office, No. 12/82

**ANNEX TO THE EUROPEAN SEARCH REPORT**

**ON EUROPEAN PATENT APPLICATION NO.** EP 12 19 8574

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2013

| Patent document cited in search report | Publication date | Patent family member(s) | | Publication date |
|---|---|---|---|---|
| | | ZA | 9504133 A | 19-01-1996 |
| EP 1348670 A1 | 01-10-2003 | NONE | | |

**EP 2 607 321 A1**

**Patent documents cited in the description**

- WO 2010062175 A